# EUROPEAN PATENT APPLICATION

(11) **EP 4 542 700 A2**
(43) Date of publication of application: **23.04.2025**
(21) Application number: 24196990.6
(22) Date of filing: 28.08.2024
(51) Int. Cl.: H01M 10/04, H01M 50/103, H01M 50/627, H01M 50/548

(54) **SECONDARY BATTERY**

(30) Priority: 16.10.2023 JP 2023178194
(71) Applicant: Prime Planet Energy & Solutions, Inc., Chuo-ku, Tokyo 103-0022 (JP)
(72) Inventor: MAEDA, Tomonori, Tokyo, 103-0022 (JP)
(74) Representative: Kuhnen & Wacker Patent- und Rechtsanwaltsbüro PartG mbB

(57) **Abstract**

A first electrode tab group (250) is disposed to be deviated from a center of an electrode assembly (200) toward a first-side end portion (E1) of a first surface (120) in a long-side direction of the first surface (120). A second-side end portion (E2) of the first surface (120) is located opposite to the first-side end portion (E1) with respect to the center of the electrode assembly (200) in the long-side direction and an injection hole (124) is provided on the second-side end portion (E2) side in the first surface (120). The cover member (500) includes a first portion (510) and a pair of second portions (520). The first portion (510) faces the injection hole (124) in the first direction. The pair of second portions (520) sandwich the electrode assembly (200) in the short-side direction of the first surface (120).

## Description

### CROSS REFERENCE TO RELATED APPLICATIONS

This nonprovisional application is based on Japanese Patent Application No. 2023-178194 filed on October 16, 2023 with the Japan Patent Office, the entire contents of which are hereby incorporated by reference.

### BACKGROUND OF THE INVENTION

### Field of the Invention

The present technology relates to a secondary battery.

### Description of the Background Art

U.S. Patent No. 11489221 is a prior art document that discloses a power battery. U.S. Patent No. 11489221 discloses a configuration in which when injecting an electrolyte solution from an injection hole into a case, an electrode assembly is protected by a blocking member from the injection of the electrolyte solution.

### SUMMARY OF THE INVENTION

When the secondary battery includes such a cover member for protecting the electrode assembly from the injection of the electrolyte solution, there is room for improvement in both ensuring ease of injection of the electrolyte solution and suppressing an increase in distance between electrode plates in the electrode assembly.

The present technology has been made to solve the above-described problem and has an object to provide a secondary battery so as to both ensure ease of injection of an electrolyte solution and suppress an increase in distance between electrode plates in an electrode assembly.

A secondary battery according to the present technology includes an electrode assembly, a case, and a cover member. The electrode assembly includes a first electrode and a second electrode having a polarity different from a polarity of the first electrode. The case accommodates the electrode assembly. The cover member covers a portion of the electrode assembly. The electrode assembly includes a first electrode tab group and a second electrode tab group. The first electrode tab group is disposed at one end portion of the electrode assembly in the first direction and is electrically connected to the first electrode. The second electrode tab group is disposed at the other end portion of the electrode assembly opposite to the one end portion in the first direction, and is electrically connected to the second electrode. The case includes a first surface. The first surface faces the electrode assembly in the first direction and is located on the first electrode tab group side. The first surface has a shape having a long-side direction and a short-side direction intersecting each other when viewed in the first direction. The first electrode tab group is disposed to be deviated from a center of the electrode assembly toward a first-side end portion of the first surface in the long-side direction of the first surface. A second-side end portion of the first surface is located opposite to the first-side end portion with respect to the center of the electrode assembly in the long-side direction and an injection hole is provided on the second-side end portion side in the first surface. The cover member includes a first portion and a pair of second portions. The first portion faces the injection hole in the first direction. The pair of second portions sandwich the electrode assembly in the short-side direction of the first surface.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to one embodiment of the present technology.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a front cross sectional view of the secondary battery shown in Fig. 1.
Fig. 6 is a front view showing a positive electrode raw plate before a positive electrode plate is formed.
Fig. 7 is a cross sectional view of the positive electrode raw plate shown in Fig. 6 along VII-VII.
Fig. 8 is a front view showing the positive electrode plate formed from the positive electrode raw plate.
Fig. 9 is a front view showing a negative electrode raw plate before a negative electrode plate is formed.
Fig. 10 is a cross sectional view of the negative electrode raw plate shown in Fig. 9 along X-X.
Fig. 11 is a front view showing the negative electrode plate formed from the negative electrode raw plate.
Fig. 12 is a perspective view showing a configuration of an electrode assembly according to the present embodiment.
Fig. 13 is a perspective view showing a configuration of a cover member according to the present embodiment.
Fig. 14 is a cross sectional view showing a positional relation of the cover member with respect to the electrode assembly and the injection hole.
Fig. 15 is a cross sectional view showing the configuration of the cover member according to the present embodiment.
Fig. 16 is a cross sectional view showing the configuration of the electrode assembly according to the present embodiment.
Fig. 17 is a cross sectional view showing a positional relation of the cover member with respect to the electrode assembly.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" is not limited to a lithium ion battery, and may include other secondary batteries such as a nickel-metal hydride battery and a sodium-ion battery. In the present specification, the term "electrode" may collectively represent a positive electrode and a negative electrode.

It should be noted that in the figures, the X direction serving as a first direction is defined to represent a direction in which a first electrode tab group and a second electrode tab group of an electrode assembly are arranged, the Y direction is defined to represent a short-side direction of the case when viewed in the X direction, and the Z direction is defined to represent a long-side direction of the case when viewed in the X direction. Further, in order to facilitate understanding of the present technology, the size of each configuration in the figures may be illustrated to be changed from its actual size.

### (Overall Configuration of Battery)

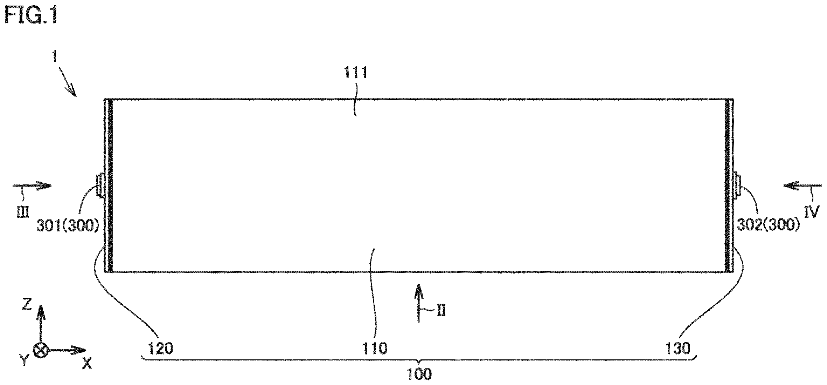

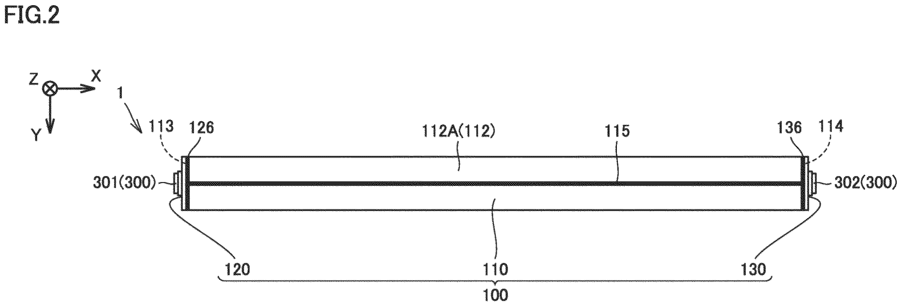

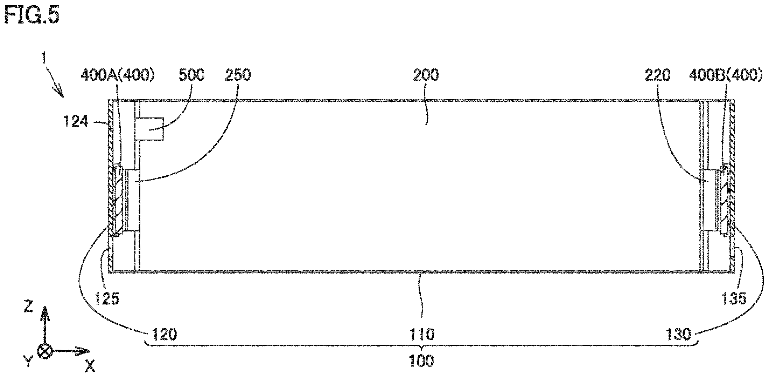

Fig. 1 is a front view of a secondary battery 1 according to the present embodiment. Figs. 2 to 4 are diagrams showing states of secondary battery 1 shown in Fig. 1 when viewed in directions of arrows II, III, and IV, respectively. Fig. 5 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (BEV), or the like. It should be noted that the purpose of use of secondary battery 1 is not limited to the use on a vehicle.

As shown in Figs. 1 to 5, secondary battery 1 includes a case 100, an electrode assembly 200, electrode terminals 300, current collectors 400, and a cover member 500.

When forming a battery assembly including secondary battery 1, a plurality of secondary batteries 1 are stacked in the Y direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case 100 accommodates electrode assembly 200. Case 100 includes a case main body 110, a first sealing plate 120, and a second sealing plate 130.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like. When case main body 110 is composed of iron or an iron alloy, case main body 110 may be plated with nickel, tin, zinc, or the like.

As shown in Figs. 1 and 2, first sealing plate 120 and second sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature.

In the present embodiment, case main body 110 is formed to be longer in the X direction of secondary battery 1 than in each of the Y direction and the Z direction of secondary battery 1. The size of case main body 110 in the X direction is preferably about 30 cm or more. In this way, secondary battery 1 can be formed to have a relatively large size (high capacity). The size of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 face each other in the Y direction. The pair of first side surface portions 111 constitute parts of the side surfaces of case 100.

The pair of second side surface portion 112 face each other in the Z direction. The pair of second side surface portions 112 constitute the bottom surface portion and upper surface portion of case 100.

The pair of first side surface portions 111 and the pair of second side surface portions 112 are provided to intersect each other. The pair of first side surface portions 111 and the pair of second side surface portions 112 are connected at their respective end portions. As in the present embodiment, each of the pair of second side surface portions 112 desirably has an area smaller than that of each of the pair of first side surface portions 111.

As shown in Fig. 2, joining portion 115 is formed at one second side surface portion 112A of the pair of second side surface portions. Joining portion 115 extends from a first opening 113 to a second opening 114. That is, joining portion 115 extends in the X direction of secondary battery 1. At joining portion 115, the end sides of the plate-shaped member of case main body 110 are joined to each other.

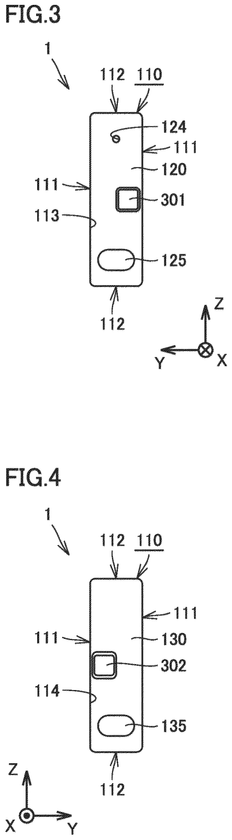

As shown in Fig. 3, first opening 113 is provided at one end portion of case main body 110 in the first direction (X direction). First opening 113 is sealed by first sealing plate 120. A sealing-plate joining portion 126 is formed at first opening 113 so as to seal first opening 113. Each of first opening 113 and first sealing plate 120 has a substantially rectangular shape in which the Y direction corresponds to its short-side direction and the Z direction corresponds to its long-side direction.

First sealing plate 120 is provided with a positive electrode terminal 301 (first electrode terminal), an injection hole 124, and a gas-discharge valve 125. The positions of positive electrode terminal 301, injection hole 124, and gas-discharge valve 125 can be appropriately changed.

As shown in Fig. 4, second opening 114 is provided at the other end portion of case main body 110 in the first direction (X direction). That is, second opening 114 is located at the end portion opposite to first opening 113. Second opening 114 is sealed by second sealing plate 130. A sealing-plate joining portion 136 is formed at second opening 114 so as to seal second opening 114. Each of second opening 114 and second sealing plate 130 has a substantially rectangular shape in which the Y direction corresponds to its short-side direction and the Z direction corresponds to its long-side direction.

Second sealing plate 130 is provided with a negative electrode terminal 302 (second electrode terminal), and a gas-discharge valve 135. The positions of negative electrode terminal 302 and gas-discharge valve 135 can be appropriately changed.

Each of first sealing plate 120 and second sealing plate 130 is composed of a metal. Specifically, each of first sealing plate 120 and second sealing plate 130 is composed of aluminum, an aluminum alloy, iron, an iron alloy, or the like. When first sealing plate 120 and second sealing plate 130 are composed of iron or an iron alloy, first sealing plate 120 and second sealing plate 130 may be plated with nickel, tin, zinc, or the like.

Positive electrode terminal 301 is electrically connected to a positive electrode (first electrode) of electrode assembly 200. Positive electrode terminal 301 is attached to first sealing plate 120, i.e., case 100.

Negative electrode terminal 302 is electrically connected to a negative electrode (second electrode) of electrode assembly 200. Negative electrode terminal 302 is attached to second sealing plate 130, i.e., case 100.

Positive electrode terminal 301 is composed of a conductive material (more specifically, a metal), and can be composed of aluminum, an aluminum alloy, or the like, for example.

Negative electrode terminal 302 is composed of a conductive material (more specifically, a metal), and can be composed of copper, a copper alloy, or the like, for example. A portion or layer composed of aluminum or an aluminum alloy may be provided at a portion of an outer surface of negative electrode terminal 302.

Injection hole 124 is sealed by a sealing member (not shown). As the sealing member, for example, a blind rivet or another metal member can be used.

Electrode assembly 200 is an electrode assembly having a flat shape and having a below-described positive electrode plate and a below-described negative electrode plate. Specifically, electrode assembly 200 is a wound type electrode assembly in which a strip-shaped positive electrode plate and a strip-shaped negative electrode plate are both wound with a strip-shaped separator being interposed therebetween.

As shown in Fig. 5, case 100 accommodates electrode assembly 200. Electrode assembly 200 is accommodated in case 100 such that the winding axis thereof is parallel to the X direction.

Specifically, one or a plurality of the wound type electrode assemblies and an electrolyte solution (electrolyte) (not shown) are accommodated inside an insulating sheet (not shown) disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and diethyl carbonate (DEC) at a volume ratio (25°C) of 30:30:40. It should be noted that instead of the electrolyte solution, a solid electrolyte may be used.

Electrode assembly 200 includes: a main body portion (portion in which a positive electrode plate and a negative electrode plate are stacked with a separator being interposed therebetween); a first electrode tab group 250 (positive electrode tab group); and a second electrode tab group 220 (negative electrode tab group).

The main body portion is constituted of a below-described positive electrode plate 240 (first electrode) and a below-described negative electrode plate 210 (second electrode).

First electrode tab group 250 is located at one end portion of electrode assembly 200 in the first direction (X direction). Specifically, first electrode tab group 250 is located at an end portion of electrode assembly 200 on the first sealing plate 120 side with respect to the main body portion thereof in the X direction.

Second electrode tab group 220 is located at the other end portion of electrode assembly 200 opposite to the one end portion thereof in the first direction (X direction). Specifically, second electrode tab group 220 is located at an end portion on the second sealing plate 130 side with respect to the main body portion in the X direction.

Each of first electrode tab group 250 and second electrode tab group 220 is formed to protrude from a central portion of electrode assembly 200 toward first sealing plate 120 or second sealing plate 130.

First electrode tab group 250 is electrically connected to the first electrode. Second electrode tab group 220 is electrically connected to the second electrode.

Current collectors 400 include a positive electrode current collector 400A and a negative electrode current collector 400B. Each of positive electrode current collector 400A and negative electrode current collector 400B is constituted of a plate-shaped member. Electrode assembly 200 is electrically connected to positive electrode terminal 301 and negative electrode terminal 302 through current collectors 400.

Positive electrode current collector 400A is disposed on first sealing plate 120 with an insulating member composed of a resin being interposed therebetween. Positive electrode current collector 400A is electrically connected to first electrode tab group 250 and positive electrode terminal 301. Positive electrode current collector 400A is composed of a conductive material (more specifically, a metal), and can be composed of aluminum, an aluminum alloy, or the like, for example. It should be noted that first electrode tab group 250 may be electrically connected to first sealing plate 120 directly or via positive electrode current collector 400A. In this case, first sealing plate 120 may serve as positive electrode terminal 301.

Negative electrode current collector 400B is disposed on second sealing plate 130 with an insulating member composed of a resin being interposed therebetween. Negative electrode current collector 400B is electrically connected to second electrode tab group 220 and negative electrode terminal 302. Negative electrode current collector 400B is composed of a conductive material (more specifically, a metal), and can be composed of copper, a copper alloy, or the like, for example.

Cover member 500 covers a portion of electrode assembly 200. The configuration of cover member 500 will be described later.

### (Configuration of Electrode Assembly 200)

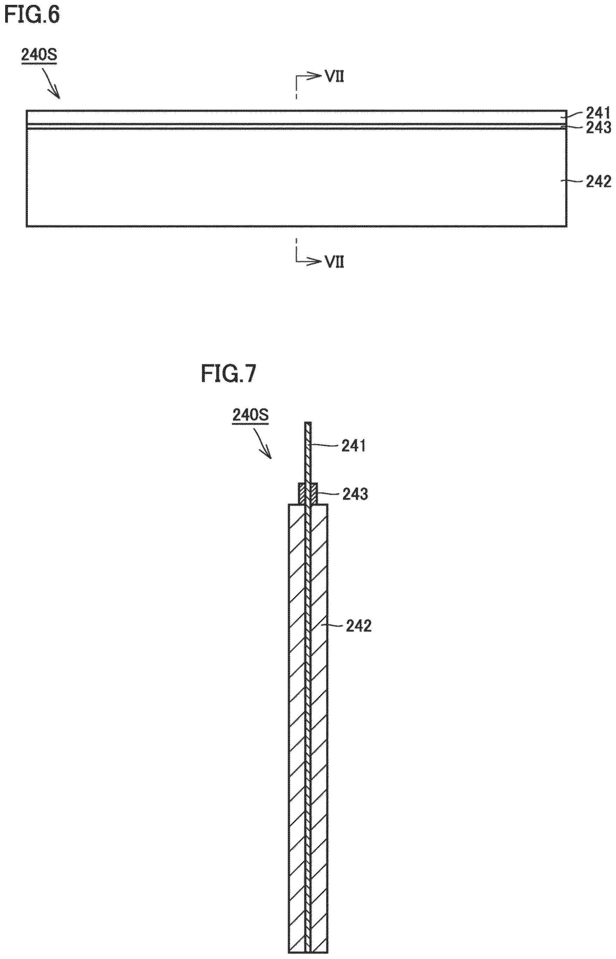

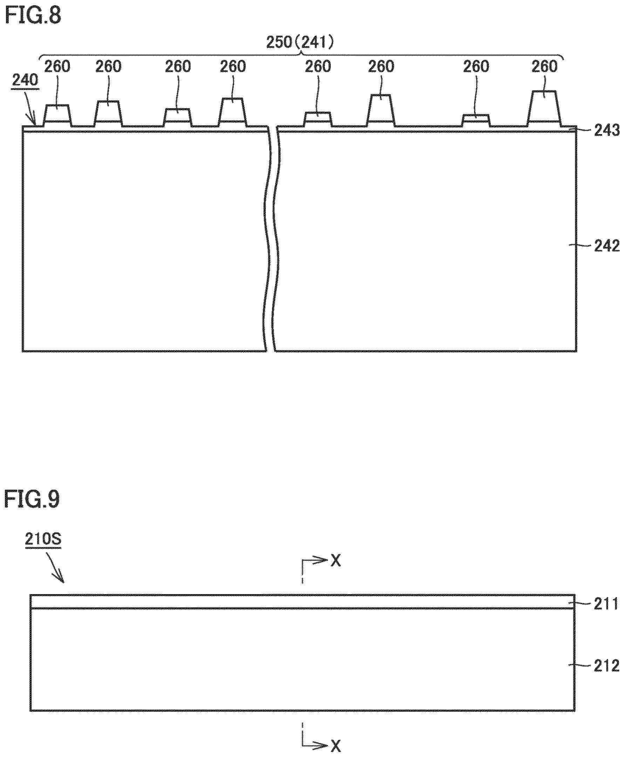

Fig. 6 is a front view showing a positive electrode raw plate 240S before a positive electrode plate 240 is formed. Fig. 7 is a cross sectional view of positive electrode raw plate 240S shown in Fig. 6 along VII-VII. Fig. 8 is a front view showing positive electrode plate 240 formed from positive electrode raw plate 240S.

Positive electrode plate 240 serving as the first electrode is manufactured by processing positive electrode raw plate 240S. As shown in Figs. 6 and 7, positive electrode raw plate 240S includes a positive electrode core body 241, a positive electrode active material layer 242, and a positive electrode protective layer 243. Positive electrode core body 241 is an aluminum foil or an aluminum alloy foil.

Positive electrode active material layer 242 is formed on positive electrode core body 241 except for each of end portions of both surfaces of positive electrode core body 241 on one side. Positive electrode active material layer 242 is formed on positive electrode core body 241 by applying a positive electrode active material layer slurry using a die coater.

The positive electrode active material layer slurry is produced by kneading a lithium-nickel-cobalt-manganese composite oxide serving as a positive electrode active material, polyvinylidene difluoride (PVdF) serving as a binder, a carbon material serving as a conductive material, and N-methyl-2-pyrrolidone (NMP) serving as a dispersion medium such that the mass ratio of the lithium-nickel-cobalt-manganese composite oxide, the PVdF, and the carbon material is about 97.5:1:1.5.

Positive electrode protective layer 243 is formed in contact with positive electrode core body 241 at an end portion of positive electrode active material layer 242 on the one side in the width direction. Positive electrode protective layer 243 is formed on positive electrode core body 241 by applying a positive electrode protective layer slurry using a die coater. Positive electrode protective layer 243 has an electrical resistance larger than that of positive electrode active material layer 242.

The positive electrode protective layer slurry is produced by kneading alumina powder, a carbon material serving as a conductive material, PVdF serving as a binder, and NMP serving as a dispersion medium such that the mass ratio of the alumina powder, the carbon material, and the PVdF is about 83:3:14.

Positive electrode core body 241 having the positive electrode active material layer slurry and the positive electrode protective layer slurry applied thereon is dried to remove the NMP included in the positive electrode active material layer slurry and the positive electrode protective layer slurry, thereby forming positive electrode active material layer 242 and positive electrode protective layer 243. Further, by compressing positive electrode active material layer 242, positive electrode raw plate 2405 including positive electrode core body 241, positive electrode active material layer 242, and positive electrode protective layer 243 is formed. Positive electrode raw plate 240S is cut into a predetermined shape, thereby forming positive electrode plate 240. Positive electrode raw plate 2405 can be cut by laser processing with application of an energy ray, die processing, cutter processing, or the like.

As shown in Fig. 8, a plurality of positive electrode tabs 260 each constituted of positive electrode core body 241 are provided at one end portion, in the width direction, of positive electrode plate 240 formed from positive electrode raw plate 240S. When positive electrode plate 240 is wound, the plurality of positive electrode tabs 260 are stacked to form first electrode tab group 250. Thus, first electrode tab group 250 is connected to positive electrode plate 240 (first electrode). The position of each of the plurality of positive electrode tabs 260 and the length thereof in the protruding direction are appropriately adjusted in consideration of the state in which first electrode tab group 250 is connected to positive electrode current collector 400A. It should be noted that the shape of positive electrode tab 260 is not limited to the one illustrated in Fig. 8.

Positive electrode protective layer 243 is provided at the root of each of the plurality of positive electrode tabs 260. Positive electrode protective layer 243 may not necessarily be provided at the root of positive electrode tab 260.

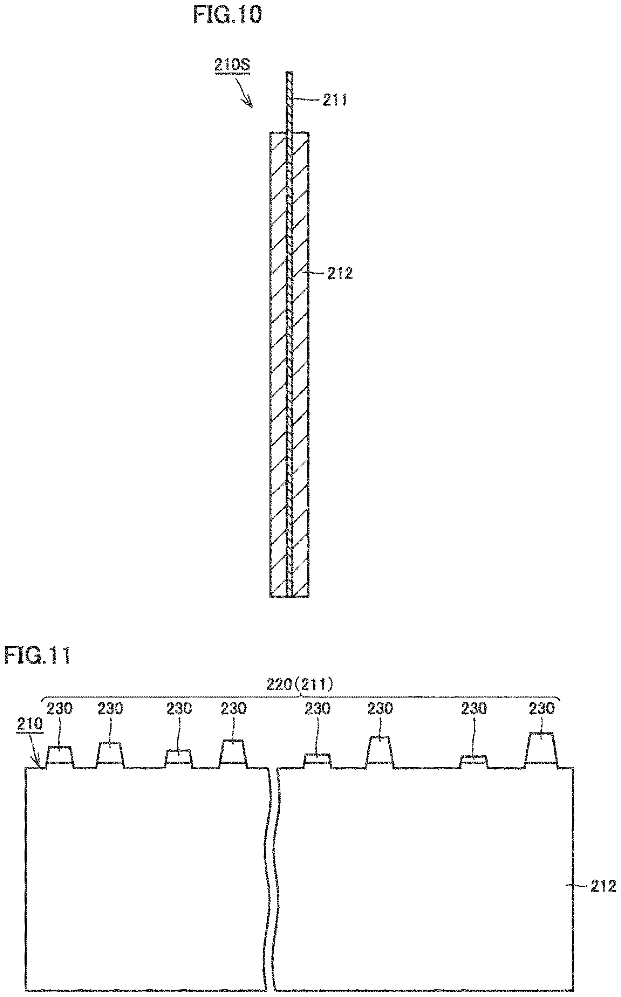

Fig. 9 is a front view showing a negative electrode raw plate before a negative electrode plate 210 is formed. Fig. 10 is a cross sectional view of negative electrode raw plate 210S shown in Fig. 9 along X-X. Fig. 11 is a front view showing negative electrode plate 210 formed from negative electrode raw plate 210S.

Negative electrode plate 210 serving as the second electrode has a polarity different from a polarity of positive electrode plate 240 serving as the first electrode. Negative electrode plate 210 is manufactured by processing negative electrode raw plate 210S. As shown in Figs. 9 and 10, negative electrode raw plate 210S includes a negative electrode core body 211 and a negative electrode active material layer 212. Negative electrode core body 211 is a copper foil or a copper alloy foil.

Negative electrode active material layer 212 is formed on negative electrode core body 211 except for each of end portions of both surfaces of negative electrode core body 211 on one side. Negative electrode active material layer 212 is formed by applying a negative electrode active material layer slurry using a die coater.

The negative electrode active material layer slurry is produced by kneading graphite serving as a negative electrode active material, styrene-butadiene rubber (SBR) and carboxymethyl cellulose (CMC) each serving as a binder, and water serving as a dispersion medium such that the mass ratio of the graphite, the SBR, and the CMC is about 98:1:1.

Negative electrode core body 211 having the negative electrode active material layer slurry applied thereon is dried to remove the water included in the negative electrode active material layer slurry, thereby forming negative electrode active material layer 212. Further, by compressing negative electrode active material layer 212, negative electrode raw plate 210S including negative electrode core body 211 and negative electrode active material layer 212 is formed. Negative electrode raw plate 210S is cut into a predetermined shape, thereby forming negative electrode plate 210. Negative electrode raw plate 210S can be cut by laser processing with application of an energy ray, die processing, cutter processing, or the like.

As shown in Fig. 11, a plurality of negative electrode tabs 230 each constituted of negative electrode core body 211 are provided at one end portion, in the width direction, of negative electrode plate 210 formed from negative electrode raw plate 210S. When negative electrode plate 210 is wound, the plurality of negative electrode tabs 230 are stacked to form second electrode tab group 220. Thus, second electrode tab group 220 is connected to negative electrode plate 210 (second electrode). The position of each of the plurality of negative electrode tabs 230 and the length thereof in the protruding direction are appropriately adjusted in consideration of the state in which second electrode tab group 220 is connected to negative electrode current collector 400B. It should be noted that the shape of negative electrode tab 230 is not limited to the one illustrated in Fig. 11.

In a typical example, the thickness of (one) negative electrode tab 230 is smaller than the thickness of (one) positive electrode tab 260. In this case, the thickness of second electrode tab group 220 is smaller than the thickness of first electrode tab group 250.

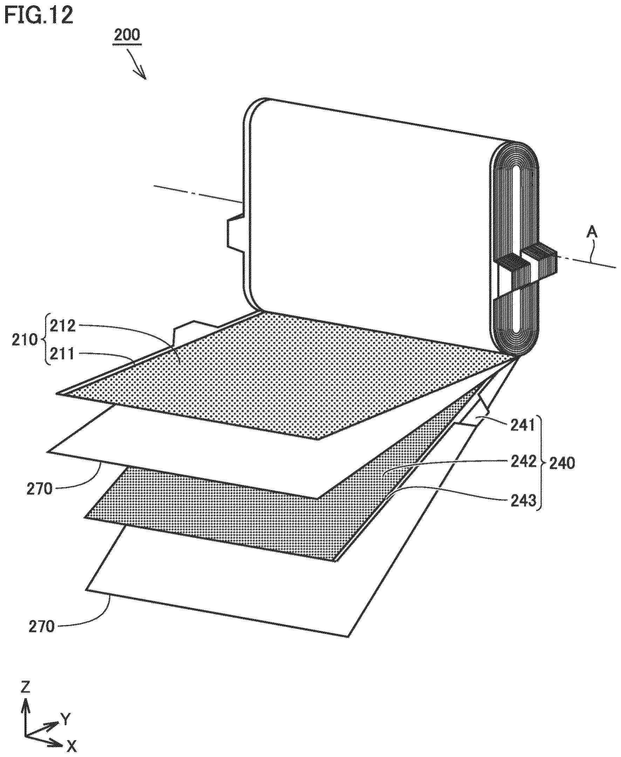

Fig. 12 is a perspective view showing a configuration of an electrode assembly according to the present embodiment.

As shown in Fig. 12, electrode assembly 200 in the present embodiment is wound with separator 270 being interposed between positive electrode plate 240 and negative electrode plate 210. Specifically, positive electrode plate 240, negative electrode plate 210, and separator 270 are wound around a winding axis A extending in the X direction. It should be noted that in the present specification, the "electrode assembly" is not limited to the wound type electrode assembly, and may be a stacked type electrode assembly in which a plurality of positive electrode plates and a plurality of negative electrode plates are alternately stacked. Separator 270 having a strip shape can be constituted of, for example, a microporous membrane composed of polyolefin. The electrode assembly may include a plurality of positive electrode plates and a plurality of negative electrode plates, respective positive electrode tabs provided in the positive electrode plates may be stacked to form a positive electrode tab group, and respective negative electrode tabs provided in the negative electrode plates may be stacked to form a negative electrode tab group. It should be noted that electrode assembly 200 may include a plurality of wound type electrode assemblies or may include a plurality of stacked type electrode assemblies.

### (Structure of Cover Member 500)

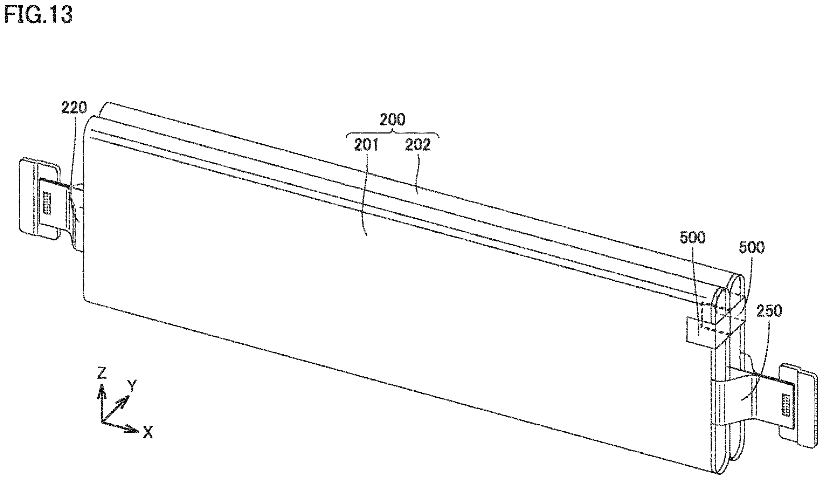

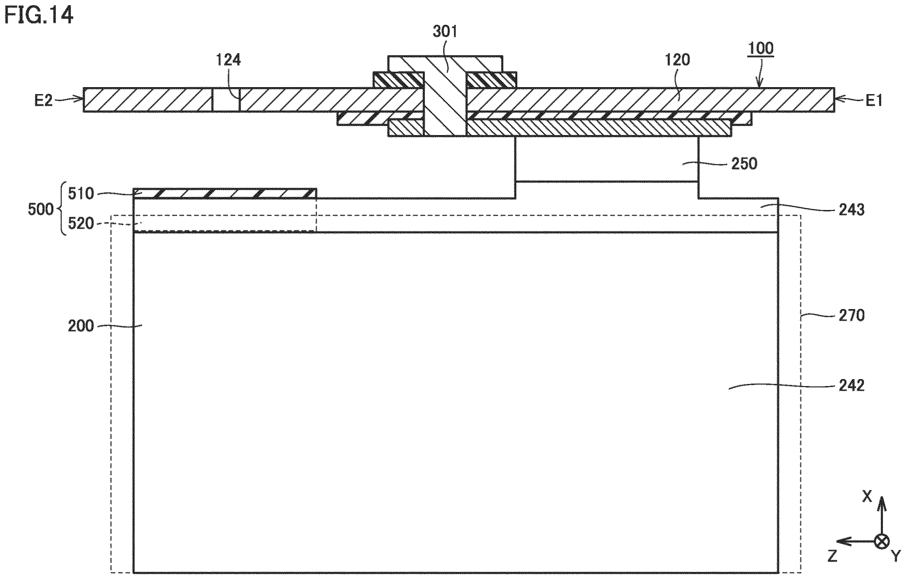

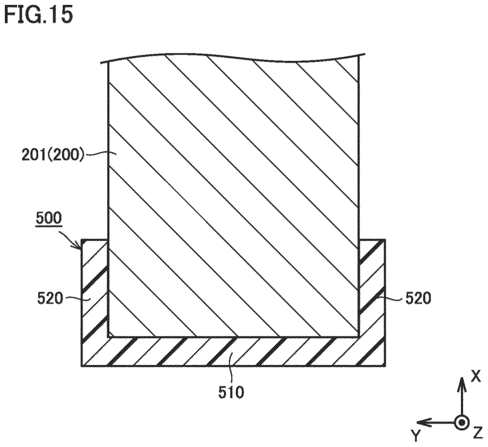

Fig. 13 is a perspective view showing the configuration of the cover member according to the present embodiment. Fig. 14 is a cross sectional view showing a positional relation of the cover member with respect to the electrode assembly and the injection hole. Fig. 15 is a cross sectional view showing the configuration of the cover member according to the present embodiment. It should be noted that Fig. 15 illustrates a case where cover member 500 is attached to a first electrode assembly 201 included in electrode assembly 200.

First, before making explanation on the structure of cover member 500, the following describes arrangements of other configurations relating to cover member 500. As shown in Fig. 14, case 100 includes a first surface. The first surface in the present embodiment is first sealing plate 120. First sealing plate 120 (first surface) faces electrode assembly 200 in the first direction (X direction). First sealing plate 120 (first surface) is located on the first electrode tab group 250 side.

As shown in Figs. 3 and 14, first sealing plate 120 (first surface) has a shape having a long-side direction (Z direction) and a short-side direction (Y direction) intersecting each other when viewed in the first direction (X direction).

First electrode tab group 250 is disposed to be deviated from the center of electrode assembly 200 toward a first-side end portion E1 of first sealing plate 120 (first surface) in the long-side direction (Z direction) of first sealing plate 120 (first surface).

Injection hole 124 is provided in first sealing plate 120 (first surface). A second-side end portion E2 of first sealing plate 120 is located opposite to first-side end portion E1 with respect to the center of electrode assembly 200 in the long-side direction (Z direction) and injection hole 124 is provided on the second-side end portion E2 side.

Next, the structure of cover member 500 will be described. As shown in Figs. 13 to 15, cover member 500 covers a portion of electrode assembly 200. Cover member 500 in the present embodiment is located on the one end portion side of electrode assembly 200 in the X direction. Cover member 500 covers a portion of electrode assembly 200 in the X direction and the Y direction.

Electrode assembly 200 according to the present embodiment includes first electrode assembly 201 and a second electrode assembly 202. One cover member 500 is provided for each of first electrode assembly 201 and second electrode assembly 202. It should be noted that when a plurality of electrode assemblies are disposed as in the present embodiment, one cover member 500 may cover all of the plurality of electrode assemblies.

Cover member 500 according to the present embodiment is a tape. Cover member 500, which is a tape, is adhered to electrode assembly 200. In cover member 500 according to the present embodiment, a first portion 510 and a pair of second portions 520 described later are adhered to electrode assembly 200.

Cover member 500 has a first portion 510 and a pair of second portions 520. First portion 510 faces injection hole 124 in the first direction (X direction). Since first portion 510 is arranged side by side with injection hole 124 in the first direction (X direction), the electrolyte solution can be avoided from directly hitting against electrode assembly 200 when injecting the electrolyte solution into case 100 from injection hole 124.

First portion 510 in the present embodiment has a planar shape extending in the YZ plane. It should be noted that first portion 510 may have a U shape when viewed in the long-side direction (Z direction). In this case, first portion 510 has a shape protruding toward first sealing plate 120. When first portion 510 has a U shape, flow of the electrolyte solution can be inclined such that the electrolyte solution injected from injection hole 124 is diverted from the electrode assembly.

The pair of second portions 520 sandwich electrode assembly 200 in the short-side direction (Y direction) of first sealing plate 120 (first surface).

First electrode tab group 250 is disposed to be deviated from the center of electrode assembly 200 toward first-side end portion E1 in the Z direction. Hence, since the electrode plates in electrode assembly 200 are not collected by the tab structure, there is a possibility that a distance between positive electrode plate 240 and negative electrode plate 210 in electrode assembly 200 becomes large on the second-side end portion E2 side. By sandwiching electrode assembly 200 between the pair of second portions 520 on the second-side end portion E2 side, the clearance between the electrode plates in electrode assembly 200 can be suppressed from being increased.

The pair of second portions 520 have substantially the same area when viewed in the Y direction. Thus, when electrode assembly 200 is sandwiched between the pair of second portions 520, surface pressure can be uniformly applied from cover member 500 to the both sides of electrode assembly 200 in the Y direction. It should be noted that the pair of second portions 520 may have different sizes.

First portion 510 and each second portion 520 according to the present embodiment are connected to each other at their end portions and are therefore contiguous to each other. It should be noted that first portion 510 and second portion 520 may not be contiguous to each other with another configuration being interposed between first portion 510 and second portion 520.

It should be noted that cover member 500 is not limited to the tape. Cover member 500 may be a clip. Further, cover member 500 may be a U-shaped structure in which a clearance between the pair of second portions 520 is narrow with respect to the thickness of electrode assembly 200.

When electrode assembly 200 is constituted of a plurality of electrode assemblies and one cover member 500 is provided for each of the plurality of electrode assemblies, the positions of the plurality of cover members 500 in the Z direction may be the same or different. When the surface pressure applied from cover member 500 to electrode assembly 200 is increased to suppress an increase in the distance between the electrode plates in electrode assembly 200, the positions of the plurality of cover members 500 in the Z direction are desirably the same. On the other hand, when the surface pressure applied from cover member 500 to electrode assembly 200 is uniform, the positions of the plurality of cover members 500 in the Z direction are desirably different so as to avoid cover members 500 from overlapping with each other in the Y direction.

### (Arrangement of Cover Member 500 with respect to Electrode Assembly 200)

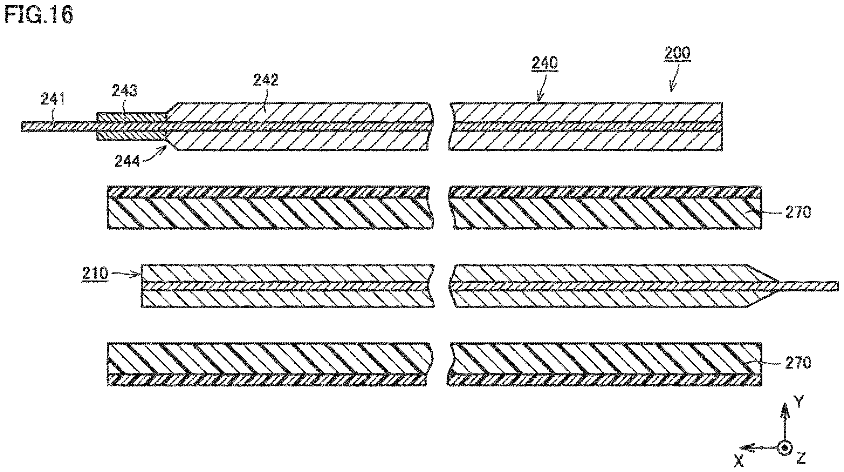

Fig. 16 is a cross sectional view showing the configuration of the electrode assembly according to the present embodiment. In Fig. 16, in order to facilitate understanding of the configuration, each member is shown in a disassembled state.

As shown in Fig. 16, positive electrode plate 240 serving as the first electrode extends at least in the first direction (X direction). In the present embodiment, positive electrode plate 240 is wound to have a flat shape when viewed in the first direction (X direction), and therefore extends in each of the X direction, the Y direction, and the Z direction.

Positive electrode active material layer 242 of positive electrode plate 240 covers at least a portion of positive electrode core body 241. The thickness of positive electrode active material layer 242 is thin at end portion 244 of positive electrode plate 240 in the first direction (X direction) due to the manufacturing method involving application thereof onto positive electrode core body 241.

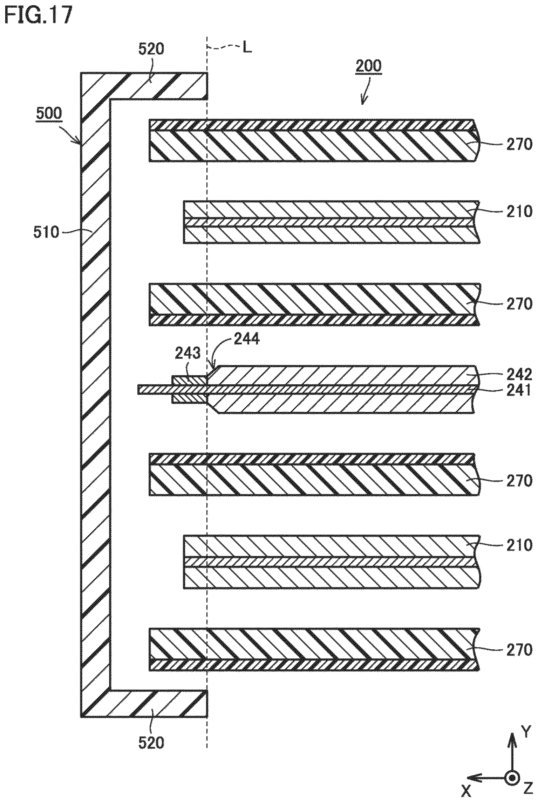

Fig. 17 is a cross sectional view showing a positional relation of the cover member with respect to the electrode assembly. In Fig. 17, in order to facilitate understanding of the configuration, each member is shown in a disassembled state with the scale of the member being changed.

As shown in Fig. 17, the pair of second portions 520 are located on the end portion side of electrode assembly 200 in the X direction with respect to an imaginary line L extending in the Y direction. The pair of second portions 520 are not arranged side by side with positive electrode active material layer 242 in the Y direction. Thus, the pair of second portions 520 of cover member 500 sandwich electrode assembly 200 in a range in which positive electrode active material layer 242 is not formed. As a result, an influence of the change in the thickness of positive electrode active material layer 242 over the surface pressure with which cover member 500 sandwiches electrode assembly 200 can be suppressed, with the result that the surface pressure applied from the pair of second portions 520 to electrode assembly 200 can be uniform.

In secondary battery 1 according to the embodiment of the present technology, since first portion 510 of cover member 500 faces injection hole 124 in the first direction (X direction), first portion 510 can protect electrode assembly 200 from the injection of the electrolyte solution. Thus, the electrolyte solution can be injected without lowering the injection rate of the electrolyte solution, thereby ensuring ease of the injection of the electrolyte solution. Further, when first electrode tab group 250 is disposed on the first-side end portion E1 side and injection hole 124 is disposed on the second-side end portion E2 side in the long-side direction (Z direction) of first sealing plate 120 (first surface), the distance between the electrode plates of electrode assembly 200 may be increased on the second-side end portion E2 side. The pair of second portions 520 of cover member 500 sandwich electrode assembly 200 on the second-side end portion E2 side in the short-side direction (Y direction) of first sealing plate 120 (first surface). Therefore, the increase in distance between the electrode plates in electrode assembly 200 can be suppressed by the pair of second portions 520. As a result, since secondary battery 1 includes cover member 500, it is possible to both ensure the ease of injection of the electrolyte solution and suppress the increase in the distance between the electrode plates in electrode assembly 200.

In secondary battery 1 according to the embodiment of the present technology, second portion 520 is provided in a range in which positive electrode active material layer 242 is not formed. Thus, the influence of the change in the thickness of positive electrode active material layer 242 over the surface pressure with which cover member 500 sandwiches electrode assembly 200 can be suppressed, with the result that the surface pressure applied from cover member 500 to electrode assembly 200 can be uniform when cover member 500 sandwiches electrode assembly 200.

In secondary battery 1 according to the embodiment of the present technology, since cover member 500 is a tape, cover member 500 can be simply configured.

In secondary battery 1 according to the embodiment of the present technology, since the tape serving as cover member 500 is adhered to electrode assembly 200, positional deviation of cover member 500 with respect to electrode assembly 200 can be suppressed.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A secondary battery (1) comprising:
an electrode assembly (200) including a first electrode and a second electrode having a polarity different from a polarity of the first electrode;
a case (100) that accommodates the electrode assembly (200); and
a cover member (500) that covers a portion of the electrode assembly (200), wherein
the electrode assembly (200) includes a first electrode tab group (250) and a second electrode tab group (220), the first electrode tab group (250) being disposed at one end portion of the electrode assembly (200) in a first direction, the first electrode tab group (250) being electrically connected to the first electrode, the second electrode tab group (220) being disposed at the other end portion of the electrode assembly (200) opposite to the one end portion in the first direction, the second electrode tab group (220) being electrically connected to the second electrode,
the case (100) includes a first surface (120) facing the electrode assembly (200) in the first direction and located on the first electrode tab group (250) side,
the first surface (120) has a shape having a long-side direction and a short-side direction intersecting each other when viewed in the first direction,
the first electrode tab group (250) is disposed to be deviated from a center of the electrode assembly (200) toward a first-side end portion (E1) of the first surface (120) in the long-side direction of the first surface (120),
a second-side end portion (E2) of the first surface (120) is located opposite to the first-side end portion (E1) with respect to the center of the electrode assembly (200) in the long-side direction and an injection hole (124) is provided on the second-side end portion (E2) side in the first surface (120), and
the cover member (500) includes
a first portion (510) facing the injection hole (124) in the first direction, and
a pair of second portions (520) that sandwich the electrode assembly (200) in the short-side direction of the first surface (120).

2. The secondary battery (1) according to claim 1, wherein
the first electrode is a positive electrode plate (240) extending at least in the first direction,
the positive electrode plate (240) includes a positive electrode core body (241), and a positive electrode active material layer (242) that covers at least a portion of the positive electrode core body (241), and
the pair of second portions (520) sandwich the electrode assembly (200) in a range in which the positive electrode active material layer (242) is not formed.

3. The secondary battery (1) according to claim 1 or 2, wherein the cover member (500) is a tape.

4. The secondary battery (1) according to claim 3, wherein the tape is adhered to the electrode assembly (200).
